# EUROPEAN PATENT SPECIFICATION

(11) **EP 0 447 123 B1**
(45) Date of publication and mention of the grant of the patent: **07.06.1995**
(21) Application number: 91301898.2
(22) Date of filing: 07.03.1991
(51) Int. Cl.: B65B 21/06, B65G 47/32

(54) **Infeed grouping mechanism for a packaging machine**
Zufuhr- und Gruppierungsmechanismus für eine Verpackungsmaschine
Alimentation et mécanisme de groupement dans une machine d'emballage

(30) Priority: 13.03.1990 GB 9005610
(43) Date of publication of application: 18.09.1991
(73) Proprietor: THE MEAD CORPORATION, Dayton Ohio 45463 (US)
(72) Inventor: Lebras, Philippe, F-36000 Chateauroux (FR)
(74) Representative: Hepworth, John Malcolm

(56) References cited:
- FR-A- 1 387 932
- FR-A- 2 163 695
- FR-A- 2 391 939
- US-A- 3 956 868
- US-A- 4 693 055

## Description

This invention relates to a mechanism for grouping together a plurality of articles from an infeed stream at an infeed end of a packaging machine and is particularly useful for grouping together a plurality of cans or bottles in a multiple packaging machine.

In a known spacer and conveying mechanism disclosed in EP-A-0 126 553 a series of spacer elements are spaced apart at fixed locations on endless chains each spacer element being configured to engage a plurality of articles from an infeed stream of articles and convey those articles downstream of the machine. The spacing between each spacer element corresponds to the spacing between successive groups of articles. GB-A-974 995 discloses a grouping mechanism for grouping articles according to the preamble of claim 1 into package units which comprises a first pair of chains which have lugs spaced apart at fixed intervals for engaging articles at an infeed end of the apparatus. The pair of chains are mounted on opposite sides of a pair of fixed support plates which together with the lugs cooperate to divide the array of articles at the infeed into groups of fixed separation and propel the groups towards a second pair of chains also having lugs spaced apart at fixed intervals. The second pair of chains has a greater downstream velocity compared to the first pair of chains. The upstream article of a group of articles is engaged by a lug of the second pair of chains thereby forcing the groups of articles forward at a greater speed than that determined by the first pair of chains.

In the present invention individual articles are engaged by individual spacer elements and a control device which may be a rotatable cylindrical cam having a helical cam track of variable pitch controls forward movement of the spacer elements. The control device is adapted to achieve a particular spacing arrangement so that, for example, a group of three spacer elements may be spaced apart from a next succeeding group of spacer elements so that the articles with which the spacer elements cooperate accordingly are similarly grouped and spaced.

One aspect of the present invention provides a grouping mechanism for grouping articles delivered to the mechanism from an infeed stream at an infeed end of a packaging machine, which mechanism comprises a series of spacer elements adapted to engage successive articles from the infeed stream and locate said articles relative to one another as the articles are conveyed through a working reach of said mechanism, said spacer elements having means for cooperating with control means which cause one group of spacer elements engaging articles comprising at least two successive articles to become spaced apart in the feed direction from a next succeeding group of spacer elements engaging articles while said spacer elements move through said working reach, transfer means being provided to return said spacer elements along a return reach such that they are returned upstream of said working reach where they are disposed for engagement with successive articles in said infeed stream.

According to a feature of this aspect of the invention said control means may be disposed in parallel relationship to the path of movement of said spacer elements in the working reach of said mechanism.

According to another feature of this aspect of the invention, said control means may comprise a rotatable cam and wherein said spacer elements may each include cam follower means for co-operation with said rotatable cam to control movement of said spacer elements through said working reach and may include an operative face remote from said cam follower means adapted to engage an article and transmit said control movement thereto. In constructions where the control means is a rotatable cam the control means may comprise a cylindrical body having a cam track provided by a continuous helical formation along said cylindrical body and wherein the pitch of said helical formation is varied along the length of the body to effect the desired spacing of one group of spacer elements from the next succeeding group of spacer elements in said feed direction.

According to yet another feature of this aspect of the invention, conveying means may be provided to introduce an infeed stream of articles into the working reach of said mechanism and wherein said spacer elements each engage individual articles upstream of said control means whereby feed movement is transmitted from said conveying means through said articles to said spacer means to advance said spacer means into engagement with said control means. In constructions where conveying means are provided to introduce an infeed stream of articles, successive groups of articles may be transferred from said conveying means onto support means within the working reach of said mechanism said transferred groups of articles being driven downstream of said conveying means by pusher elements operable in said working reach.

According to a still further feature of this aspect of the invention said transfer means may comprise an endless belt positioned for co-operation with said spacer elements which leave the downstream end of said control means after disengagement from said articles to return said spacer elements along said return reach of the mechanisim to the upstream end of said control means. In mechanisms where the transfer means is an endless belt the endless belt may be a friction belt which engages said cam follower means of the spacer elements to return said spacer elements along said return reach.

According to yet another feature of this aspect of the invention guide means may be provided along the working reach of said mechanism remote from said spacer elements to maintain said articles in their designated feed path.

Preferably, guide followers are provided on said spacer elements for cooperation with guide tracks which define the path of movement of said spacer elements in the mechanism.

Another aspect of the invention provides a method of grouping articles delivered from an infeed stream which method comprises engaging successive articles with spacer elements from the infeed stream so that those articles are located relative to one another during feed movement of the articles, causing the spacer elements to be acted upon by control means so that one group of spacer elements engaging articles is advanced with respect to and thereby spaced from the next succeeding group of spacer elements engaging articles while the spacer elements move along the feed path of said articles and thereafter returning the spacer elements upstream of said control means such that they are appropriately spaced one from the next for engagement with successive articles in said infeed stream.

An embodiment of the invention grouping mechanism according to the invention will now be described, by way of example, with reference to the accompanying drawings, in which:-
FIGURE 1 is a schematic plan view of the grouping mechanism disposed alongside an article feed path at the infeed end of a packaging machine;
FIGURE 1a is a detailed perspective view of one of the spacer elements of the mechanism;

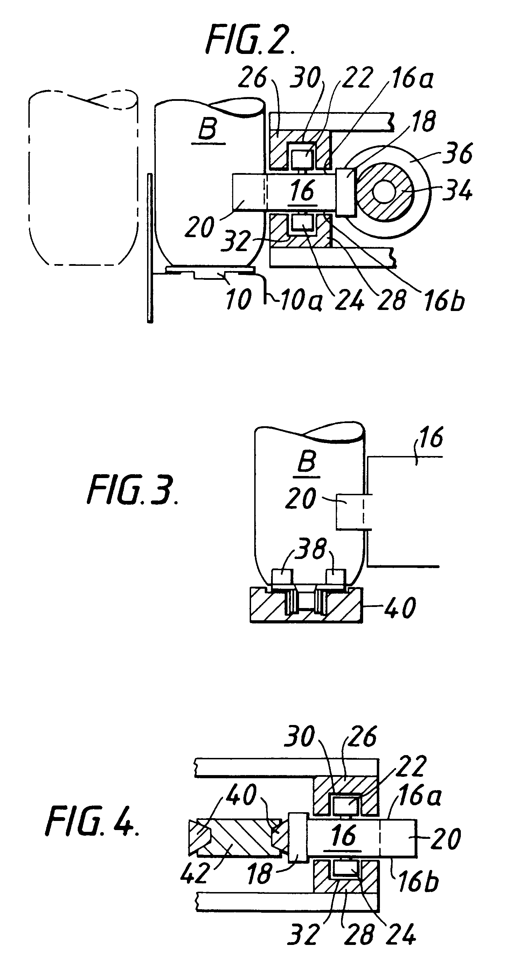

FIGURE 2 is a schematic cross section taken along the line 2-2 in Figure 1 of the drawings;
FIGURE 3 is a schematic vertical cross section taken along the line 3-3 in Figure 1 of the drawings; and
FIGURE 4 is a schematic vertical cross section taken along the line 4-4 in Figure 1 of the drawings.

Referring to the drawings, a conveyor belt 10 moving on a support platform 10a introduces an infeed stream of articles such as cans or bottles "B" in side by side abutting relationship into the infeed end of a multiple packaging machine (not shown). Individual articles in abutting side-by-side relationship are fed along by the conveyor 10 and are guided along one side of the conveyor by an upstanding fixed guide plate 12.

The grouping mechanism 14 comprises an endless series of individual spacer elements 16 which are guided along in a generally ovate path and has a working reach "W" in which the spacer elements engage successive articles from the infeed stream and locate the articles relative to one another as they are conveyed through the working reach of the mechanism. The mechanism also includes a return reach "R" in which the spacer elements 16 are conveyed against the feed direction to be returned upstream of the working reach so that they are appropriately spaced one from the next for engagement with successive articles in the infeed stream.

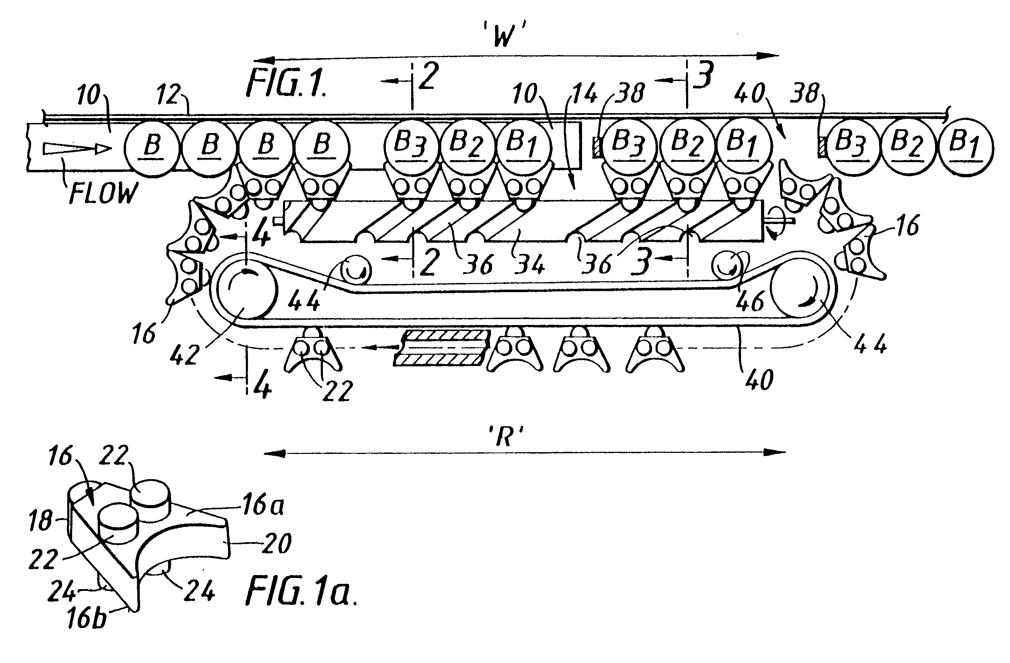

As best seen in Figure 1a of the drawings, each of the spacer elements 16 is of generally deltoid configuration having at its apex a part-cylindrical cam follower 18 and, at its opposite broader end, an operative face which comprises a part-cylindrical recess 20 which is shaped substantially to conform to a peripheral wall portion of a bottle or can which the element is to engage.

Intermediate the operative face 20 and the cam follower 16, each spacer element includes a pair of cylindrical guide projections 22, 24 upstanding from both its uppermost 16a and lowermost 16b surfaces. These guide projections engage in upper and lower guide tracks 26, 28 respectively, which define the generally ovate path in which the spacer elements are thereby constrained to move and are provided with upper and lower guide rails 30, 32 respectively in which the respective pairs of guide projections engage.

The working reach of the spacer elements is disposed intermediate the feed path of the articles on conveyor 10 to be grouped and a control device for controlling the movement of the guide elements through the working reach of the mechanism.

The control device comprises a cylindrical cam 34 having a continuous helical cam track 36 along its length and which is disposed with its longitudinal axis parallel to the article feedpath. The cylindrical cam is rotated about its longitudinal axis (not shown) by suitable drive means and is located such that as each spacer element approaches the cylindrical cam its cam follower engages in the helical cam track and is carried forward along the working reach in the downstream direction of the mechanism.

It will be seen that the helical pitch of the cam track is varied so that after an initial single turn the pitch elongates longitudinally of the cam whereafter three equidistant and relatively closely spaced complete helical revolutions are provided. Thereafter, the helical pitch again elongates longitudinally of the cam and a further three equidistant and relatively closely spaced complete helical revolutions are formed. This particular arrangement of the helical cam track causes a group of three spacer elements to be guided in side by side relationship but spaced from the next succeeding group of spacer elements. Thus the trailing article B3 in one group of articles will be spaced downstream of the leading article B1 in the next succeeding group. In this particular embodiment the spacer elements are grouped together in successive groups of three so that three articles in aligned and abutting relationship forming a first group of articles are spaced from a similar and next succeeding group of articles along the working reach of the mechanism. However, other group formations are envisaged by the substitution in the mechanism of different cam track formations. For example groups of two or four or five articles can readily be formed by providing a cylindrical cam with the appropriate helical pitch variation of its cam track.

At a location approximately intermediate the two groups of articles which are formed by the cylindrical cam in the working reach, the infeed conveyor 10 terminates and the successive groups of articles are transferred onto and thereafter conveyed downstream of the mechanism by an endless series of pusher elements which engage the trailing article B3 of each of the groups B1-B3. This form of pusher element 38 is well known in the art and normally would be provided at spaced intervals along an endless chain having a working reach immediately below a support platform 40 for the articles.

As successive spacer elements leave the downstream end of the cylindrical cam, having achieved the grouping of the articles, they are temporarily free from direct forward drive but as a line pressure is built up in the fixed guides the spacer elements engage one another and are thereby pushed along their guide track and contact an endless friction belt 40 entrained about a pair of spaced drive sprockets 42 and 44.

The rotating friction belt 40 engages the cam follower 18 of each of the spacer elements 16 and conveys the spacer elements along the return reach "R" of the mechanism so that they are returned upstream of the working reach to a reservoir or staging area where they are disposed for engagement with successive articles in the infeed stream upstream of the cylindrical cam 34. Along a return reach of the friction belt 40 a pair of tensioning rollers 44, 46 are provided adjacent each of the drive sprockets to keep the working reach of the belt taut.

It is envisaged that a similar grouping mechanism may be provided on the other side of the upstanding longitudinal guide 12 so that articles are conveyed in groups of two rows for subsequent packaging. It will be appreciated that other grouping formations may be accomplished by substituting the cylindrical cam for one having a different cam track helical pitch arrangement. Where such alternative cylindrical cams are used in conjunction with an arrangement including two such grouping mechanisms it is possible to produce groups of articles having, for example, six articles arranged in two rows of three or four articles arranged in two groups of two or simply two articles in side by side relationship on either side of the fixed guide 12.

## Claims

1. A grouping mechanism for grouping articles (B) delivered to the mechanism from an infeed stream at an infeed end of a packaging machine, which mechanism comprises a series of spacer elements (16) adapted to engage successive articles (B) from the infeed stream and locate said articles relative to one another as the articles are conveyed through a working reach (W) of said mechanism, transfer means (40) being provided to return said spacer elements along a return reach (R) such that they are returned upstream of said working reach (W) where they are disposed for engagement with successive articles in said infeed stream, characterised by said spacer elements (16) having means (18) for cooperating with control means (34) which cause one group of spacer elements engaging articles comprising at least two successive articles to become spaced apart in the feed direction from a next succeeding group of spacer elements engaging articles while said spacer elements (16) move through said working reach (W).

2. A grouping mechanism according to claim 1, wherein said control means (34) is disposed in parallel relationship to the path of movement of said spacer elements (16) in the working reach (W) of said mechanism.

3. A grouping mechanism according to claim 1 or claim 2, wherein said control means comprises a rotatable cam (34) and wherein said spacer elements (16) each include cam follower means (18) for cooperation with said rotatable cam (34) to control movement of said spacer elements (16) through said working reach (W) and include an operative face (20) remote from said cam follower means (18) adapted to engage an article (B) and transmit said control movement thereto.

4. A grouping mechanism according to claim 3, wherein said control means comprises a cylindrical body (34) having a cam track (36) provided by a continuous helical formation along said cylindrical body (34) and wherein the pitch of said helical formation (36) is varied along the length of the body (34) to effect the desired spacing of one group of spacer elements (16) from the next succeeding group of spacer elements in said feed direction.

5. A grouping mechanism according to any of the preceding claims wherein conveying means (10) is provided to introduce an infeed stream of articles into the working reach of said mechanism and wherein said spacer elements (16) each engage individual articles (B) upstream of said control means (34) whereby feed movement is transmitted from said conveying means (10) through said articles (B) to said spacer means (16) to advance said spacer means (16) into engagement with said control means (34).

6. A grouping mechanism according to claim 5 wherein successive groups of articles (B) are transferred from said conveying means (10) onto support means (16) within the working reach (W) of said mechanism said transferred groups of articles being driven downstream of said conveying means (34) by pusher elements (38) operable in said working reach (W).

7. A grouping mechanism according to any of claims 3 to 6 wherein said transfer means comprises an endless belt (40) positioned for cooperation with said spacer elements (16) which leave the downstream end of said control means (34) after disengagement from said articles (B) to return said spacer elements (16) along said return reach (R) of the mechanism to the upstream end of said control means.

8. A grouping mechanism according to claim 7, wherein said endless belt (40) is a friction belt which engages said cam follower means (18) of the spacer elements (16) to return said spacer elements along said return reach.

9. A grouping mechanism according to any of the preceding claims, wherein guide means are provided along the working reach (W) of said mechanism remote from said spacer elements (16) to maintain said articles in their designated feed path.

10. A grouping mechanism according to any claims 3 to 9, wherein guide followers (22,24) are provided on said spacer elements (16) for cooperation with guide tracks (30,32) provided outside said working reach of the mechanism.

11. A method of grouping articles delivered from an infeed stream which method comprises engaging successive articles (B) with spacer elements (16) from the infeed stream so that those articles are located relative to one another during feed movement of the articles (B), causing the spacer elements to be acted upon by control means (34) so that one group of spacer elements engaging articles becomes advanced with respect to and thereby spaced from the next succeeding group of spacer elements engaging articles while the spacer elements (16) move along the feed path of said articles (B) and thereafter returning the spacer elements (16) upstream of said control means (34) such that they are appropriately spaced one from the next for engagement with successive articles in said infeed stream.

## Patentansprüche

1. Gruppierungsmechanismus zum Gruppieren von Artikeln (B), die zu dem Mechanismus von einem Zufuhrstrom an einem Zufuhrende einer Verpackungsmaschine zugeführt werden, wobei der Mechanismus eine Reihe Abstandselemente (16) aufweist, die dazu geeignet sind, in aufeinanderfolgende Artikel (B) von dem Zufuhrstrom einzugreifen und die Artikel relativ zueinander anzuordnen, wenn die Artikel durch einen Arbeitsbereich (W) des Mechanismus befördert werden, wobei eine Übertragungseinrichtung (14) vorgesehen ist, um die Abstandselemente entlang eines Rückführbereichs (R) so zurückzuführen, daß sie einlaufseitig des Arbeitsbereichs (W) zurückgeführt werden, wo sie für einen Eingriff mit aufeinanderfolgenden Artikeln in dem Zufuhrstrom angeordnet werden, dadurch gekennzeichnet, daß die Abstandselemente (16) Einrichtungen (18) zum Zusammenwirken mit einer Steuereinrichtung (34) besitzen, die bewirkt, daß eine Gruppe Abstandselemente in Artikel eingreift, die mindestens zwei aufeinanderfolgende Artikel umfassen, damit sie voneinander in der Zufuhrrichtung von einer nächsten, darauffolgenden Gruppe Abstandselemente, die in Artikel eingreifen, beabstandet werden, während sich die Abstandselemente (16) durch den Arbeitsbereich (W) bewegen.

2. Gruppierungsmechanismus nach Anspruch 1, wobei die Steuereinrichtung (34) in paralleler Beziehung zu dem Durchgangsweg der Bewegungen der Abstandselemente (16) in dem Arbeitsbereich (W) des Mechanismus angeordnet ist.

3. Gruppierungsmechnanismus nach Anspruch 1 oder Anspruch 2, wobei die Steuereinrichtung einen drehbaren Nocken 34 aufweist und wobei die Abstandselemente (16) jeweils eine Nockenfolgeeinrichtung (18) zum Zusammenwirken mit dem drehbaren Nocken (34) umfassen, um die Bewegung der Abstandselemente (16) durch den Arbeitsbereich (W) zu steuern, und eine Arbeitsfläche (20) umfassen, die von den Nockenfolgeeinrichtungen (18) entfernt sind, die dazu geeignet ist, in einen Artikel (B) einzugreifen und die Steuerbewegung darauf zu übertragen.

4. Gruppierungsmechanismus nach Anspruch 3, wobei die Steuereinrichtung einen zylindrischen Körper (34) aufweist, der eine Nockenspur (36) besitzt, die durch eine kontinuierliche, spiralförmige Formation entlang des zylindrischen Körpers (34) vorgesehen ist, und wobei die Teilung der spiralförmigen Formation (36) entlang der Länge des Körpers (34) variiert wird, um die erwünschte Beabstandung einer Gruppe von Abstandselementen (16) von der nächsten, darauffolgenden Gruppe von Abstandselementen in der Zufuhrrichtung zu bewirken.

5. Gruppierungsmechanismus nach einem der vorhergehenden Ansprüche, wobei die Fördereinrichtung (10) so vorgesehen ist, um einen Zufuhrstrom von Artikeln in den Arbeitsbereich des Mechanismus einzuführen, und wobei die Abstandselemente (16) jeweils in einzelne Artikel (B) einlaufseitig der Steuereinrichtung (34) eingreifen, wodurch eine Zufuhrbewegung von der Fördereinrichtung (10) durch die Artikel (B) auf die Abstandseinrichtung (16) übertragen wird, um die Abstandseinrichtung (16) in Eingriff mit der Steuereinrichtung (34) vorzuschieben.

6. Gruppierungsmechanismus nach Anspruch 5, wobei aufeinanderfolgende Gruppen Artikel (B) von der Fördereinrichtung (10) auf eine Trageeinrichtung (16) innerhalb des Arbeitsbereichs (W) des Mechanismus überführt werden, wobei die überführten Gruppen von Artikeln auslaufseitig der Fördereinrichtung (34) durch Schubelemente (38) bewegt werden, die in dem Arbeitsbereich (W) arbeiten.

7. Gruppierungsmechanismus nach einem der Ansprüche 3 bis 6, wobei die Überführungseinrichtung einen endlosen Riemen (40) aufweist, der für ein Zusammenwirken mit den Abstandselementen (16) positioniert ist, die das auslaufseitige Ende der Steuereinrichtung (34) nach einem Außereingrifftreten aus den Artikeln (B) verlassen, um die Abstandselemente (16) entlang des Rückführbereichs (R) des Mechanismus zu dem auslaufseitigen Ende der Steuereinrichtung zurückzuführen.

8. Gruppierungsmechanismus nach Anspruch 7, wobei der endlose Riemen (40) ein Reibungsriemen ist, der in die Nockenfolgeeinrichtung (18) der Abstandselemente (16) eingreift, um die Abstandselemente entlang des Rückführbereichs zurückzuführen.

9. Gruppierungsmechanismus nach einem der vorhergehenden Ansprüche, wobei die Führungseinrichtungen entlang des Arbeitsbereichs (W) des Mechanismus entfernt von den Abstandselementen (16) vorgesehen sind, um die Artikel in deren zugeordneten Zufuhrdurchgangsweg zu halten.

10. Gruppierungsmechanismus nach einem der Ansprüche 3 bis 9, wobei Führungsfolgeeinrichtungen (22,24) an den Abstandselementen (16) für ein Zusammenwirken mit Führungsspuren (30,32) vorgesehen sind, die außenseitig des Arbeitsbereichs des Mechanismus vorgesehen sind.

11. Verfahren zum Gruppieren von Artikeln, die von einem Zufuhrstrom geliefert werden, wobei das Verfahren das Eingreifen aufeinanderfolgender Artikel (B) mit Abstandselementen (16) von dem Zufuhrstrom so aufweist, daß diese Artikel relativ zueinander während einer Zufuhrbewegung der Artikel (B) angeordnet werden, wodurch bewirkt wird, daß die Abstandselemente durch die Steuereinrichtung (34) so aktiviert werden, daß eine Gruppe Abstandselemente, die in Artikel eingreifen, hinsichtlich der nächsten, danachfolgenden Gruppe von Abstandselementen, die in Artikel eingreifen, vorgeschoben und dadurch von diesen beabstandet werden, während sich die Abstandselemente (16) entlang des Zufuhrdurchgangswegs der Artikel (B) bewegen, und daß danach die Abstandselemente (16) einlaufseitig der Steuereinrichtung (34) zurückgeführt werden derart, daß sie geeignet von dem Nächsten für einen Eingriff mit aufeinanderfolgenden Artikeln in dem Zufuhrstrom beabstandet sind.

## Revendications

1. Mécanisme de groupement pour grouper des objets délivrés au mécanisme depuis un flot d'alimentation à l'extrémité d'alimentation d'une machine d'emballage, lequel mécanisme comporte une série d'éléments d'espacement adaptés à s'engager avec des objets successifs du flot d'alimentation et à positionner lesdits objets l'un par rapport à l'autre alors que les objets sont convoyés suivant un parcours de travail dudit mécanisme, lesdits éléments d'espacement ayant un moyen pour coopérer avec un moyen de commande qui fait un groupe d'objets comportant au moins deux objets successifs s'écarter dans la direction d'alimentation d'un prochain groupe d'objets qui succède tandis que lesdits éléments d'espacement se déplacent suivant ledit parcours de travail, un moyen de transfert étant prévu pour ramener lesdits éléments d'espacement le long d'un parcours de retour de sorte qu'ils sont ramenés en amont dudit parcours de travail où ils sont disposés pour rentrer en engagement avec les objets successifs dudit flot d'alimentation.

2. Mécanisme de groupement selon la revendication 1, dans lequel ledit moyen de commande est disposé parallèlement au trajet desdits éléments d'espacement dans le parcours de travail dudit mécanisme.

3. Mécanisme de groupement selon la revendication 1 ou la revendication 2, dans lequel ledit moyen de commande comporte une came pouvant être mise en rotation et dans lequel lesdits éléments d'espacement comportent chacun un moyen suiveur de came pour coopérer avec ladite came pouvant être mise en rotation afin de commander le mouvement desdits éléments d'espacement suivant ledit parcours de travail et comportent une face active, éloignée dudit moyen suiveur de came, adaptée à s'engager avec un objet et à lui transmettre ledit mouvement de commande.

4. Mécanisme de groupement selon la revendication 3, dans lequel ledit moyen de commande comporte un corps cylindrique ayant un chemin de came procuré par une formation hélicoïdale continue le long dudit corps cylindrique et dans lequel le pas de ladite formation hélicoïdale est variable suivant la longueur du corps pour effectuer l'espacement désiré d'un groupe d'éléments d'espacement vis-à-vis du prochain groupe d'éléments d'espacement qui succède dans ladite direction d'alimentation.

5. Mécanisme de groupement selon l'une quelconque des revendications précédentes dans lequel un moyen de convoyage est prévu pour introduire un flot d'alimentation en objets dans le parcours de travail dudit mécanisme et dans lequel lesdits éléments d'espacement s'engagent chacun avec un objet individuel en amont dudit moyen de commande grâce à quoi un mouvement d'alimentation est transmis depuis ledit moyen de convoyage par l'intermédiaire desdits objets auxdits éléments d'espacement pour amener lesdits éléments d'espacement à s'engager avec ledit moyen de commande.

6. Mécanisme de groupement selon la revendication 5, dans lequel des groupes successifs d'objets sont transférés depuis ledit moyen de convoyage sur un moyen de support durant ledit parcours de travail dudit mécanisme, lesdits groupes d'objets transférés étant entraînés en aval dudit moyen de convoyage par des éléments pousseur qui peuvent fonctionner dans ledit parcours de travail.

7. Mécanisme de groupement selon l'une quelconque des revendications 3 à 6 dans lequel ledit moyen de transfert comporte une courroie positionnée pour coopérer avec lesdits éléments d'espacement qui quittent l'extrémité aval dudit moyen de commande après désengagement desdits objets, afin de ramener lesdits éléments d'espacement suivant ledit parcours de retour du mécanisme jusqu'à l'extrémité amont dudit moyen de commande.

8. Mécanisme de groupement selon la revendication 7, dans lequel ladite courroie sans fin est une courroie de friction qui s'engage avec ledit moyen suiveur de came desdits éléments d'espacement pour ramener lesdits éléments d'espacement suivant ledit parcours de retour.

9. Mécanisme de groupement selon l'une quelconque des revendications précédentes, dans lequel un moyen de guidage est prévu le long du parcours de travail dudit mécanisme, éloigné desdits éléments d'espacement, pour maintenir lesdits objets dans leur trajet d'alimentation désigné.

10. Mécanisme de groupement selon l'une quelconque des revendications 3 à 9, dans lequel des suiveurs de guide sont prévus sur lesdits éléments d'espacement pour coopérer avec des chemins de guidage prévus à l'extérieur dudit parcours de travail du mécanisme.

11. Procédé pour grouper des objets délivrés depuis un flot d'alimentation, procédé dans lequel on engage des objets successifs avec des éléments d'espacement du flot d'alimentation de sorte que ces objets soient positionnés l'un par rapport à l'autre pendant le mouvement d'alimentation de ces objets, on fait se mettre en action les éléments d'espacement par des moyens de commande de sorte qu'un groupe d'objets est entraîné par rapport, à et en conséquence espacé du prochain groupe d'objets qui succède tandis que les éléments d'espacement se déplacent le long du trajet d'alimentation desdits objets, et ensuite on ramène les éléments d'espacement en amont dudit moyen de commande de sorte qu'ils sont espacés l'un de celui qui le suit d'une manière appropriée pour s'engager avec des objets successifs dudit flot d'alimentation.
